Europäisches Patentamt

European Patent Office

Office européen des brevets

(11) Numéro de publication: **0 311 522**
**A1**

# (12) DEMANDE DE BREVET EUROPEEN

(21) Numéro de dépôt: 88402528.9

(22) Date de dépôt: 06.10.88

(51) Int. Cl.⁴: **B 25 B 11/02**
B 25 B 5/00, B 21 J 15/42,
B 23 K 37/04

(30) Priorité: 08.10.87 FR 8713902

(43) Date de publication de la demande:
12.04.89 Bulletin 89/15

(84) Etats contractants désignés: DE GB IT SE

(71) Demandeur: AVIONS MARCEL DASSAULT-BREGUET
AVIATION
27, Rue du Professeur Victor Pauchet
F-92420 Vaucresson (FR)

(72) Inventeur: Gignac, Jacques
28 Avenue Emile Zola-Résidence Lacordaire
F-59000 Lille (FR)

Maurel, Patrice
34 Rue Roger Bouvry
F-59113 Seclin (FR)

Guerin, Sylvain
20 Rue de l'Abbé Bonpain
F-59113 Seclin (FR)

(74) Mandataire: Colas, Jean-Pierre et al
Cabinet de Boisse 37, avenue Franklin D. Roosevelt
F-75008 Paris (FR)

(54) Dispositif d'accostage de deux éléments de structure à assembler.

(57) Dans ce dispositif pour l'accostage et le maintien sous contrainte de deux éléments de structure à assembler, deux outils ou serre-flancs (4, 5) agissant en opposition pour serrer entre eux les surfaces à assembler sont portés par un anneau (1.) sur lequel ils sont mobiles diamétralement, cet anneau étant lui-même porté par un support annulaire concentrique suspendu (2), dans lequel il peut tourner librement et qui peut être déplacé dans les trois directions de l'espace.

Application à l'assemblage de pièces de forme complexe.

FIG..2

Description

## Dispositif d'accostage de deux éléments de structure à assembler.

L'invention concerne un dispositif assurant l'accostage de deux éléments de structure à assembler et leur maintien sous contrainte pendant l'opération d'assemblage, ce dernier pouvant être réalisé d'une façon quelconque: rivetage, soudure, etc..

Le document US-A-4 171 800 décrit un dispositif comportant deux outils qui agissent en opposition pour serrer entre eux un objet à traiter, et qui sont portés par un anneau lui-même porté par un support annulaire concentrique suspendu, dans lequel il peut tourner librement, cet anneau pouvant être déplacé dans les trois directions de l'espace. Les outils sont articulés entre eux pour former ensemble une pince qui occupe presque tout l'espace à l'intérieur de l'anneau , et la pince à traiter doit être placée à une distance importante du plan de l'anneau, ce qui rend difficile le traitement des pièces pesantes, en raison du porte-à-faux.

La présente invention a pour but de fournir un dispositif du genre indiqué et qui permette le traitement de pièces de grandes dimensions ou d'un poids élevé.

Pour obtenir ce résultat, il est prévu, selon l'invention, que les outils sont des serre-flancs qui sont mobiles en translation le long d'un même diamètre de l'anneau.

De préférence, l'anneau muni des serre-flancs a un diamètre suffisant pour qu'une structure de machine, à laquelle on veut réunir d'autres éléments, puisse être engagée dans cet anneau, entre les serre-flancs.

Dans un mode de réalisation particulier, le support annulaire peut tourner autour d'un axe vertical de suspension qui est déplaçable en translation, d'une part selon sa propre direction et, d'autre part, perpendiculairement.

Les serre-flancs sont conjugués de manière que le mouvement diamétral de l'un entraîne un mouvement diamétral égal, mais opposé, de l'autre. Ils sont portés par des tiges disposées et guidées diamétralement et dont les déplacements sont conjugués par exemple par crémaillères et pignons avec renvoi de mouvement d'un pignon à l'autre.

Un moteur peut être prévu pour assurer un déplacement rapide des serre-flancs.

Pour permettre un serrage final énergique des serreflancs sur les éléments à accoster, des vérins sont associés aux guides des tiges des serre-flancs, ces vérins actionnant les tiges dans le dernier temps du serrage. De préférence, ces vérins agissent en bout des tiges et sont escamotables pour libérer les tiges quand on veut écarter les serre-flancs.

La surface d'appui de ceux-ci sur les éléments à accoster est de préférence ajourée, dans son centre, pour permettre de réaliser une opération d'assemblage par rivetage, soudure ou autre, alors que les serre-flancs sont serrés de part et d'autre des éléments à assembler.

D'autres caractéristiques de l'invention ressortiront de la description qui va suivre en regard du dessin annexé, donné à titre d'exemples.

La figure 1 est une vue schématique en perspective d'un mode de réalisation du dispositif selon l'invention.

La figure 2 montre, à plus grande échelle, une coupe des deux anneaux concentriques, la coupe étant faite selon le diamètre occupé par les serre-flancs.

La figure 3 montre en élévation partielle les anneaux vus selon la flèche F de la figure 2.

La figure 4 montre le bout d'un serre-flanc, par exemple du serre-flanc supérieur de la figure 2 regardé dans le sens de la flèche F1.

Le dispositif représenté sur les dessins comporte un premier anneau 1, monté concentriquement sur un deuxième anneau 2, dans lequel il peut tourner librement, par exemple par l'intermédiaire de roulements 3.

L'anneau 2 constitue la structure porteuse reprenant l'ensemble des efforts d'accostage.

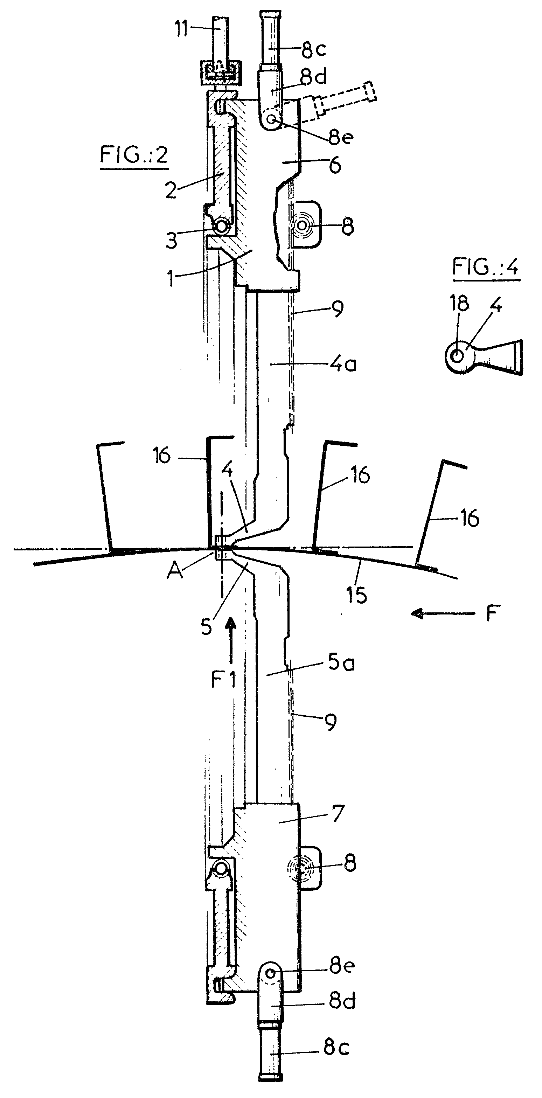

Selon un diamètre de l'anneau 1 sont disposés deux serre-flancs 4, 5 en forme de pied-de-biche, qui sont mobiles en translation le long de ce diamètre dans des sens opposés. Les tiges 4a, 5a de ces serre-flancs sont guidées dans des boîtes 6, 7 fixées en des points diametralement opposés de l'anneau 1 et qui contiennent chacune un pignon 8 engrenant avec une crémaillère 9 prévue sur la tige 4a, 5b. La liaison en rotation des axes des pignons est assurée par un arbre à cardans 8a disposé sur la périphérie de l'anneau 1 et tournant dans des paliers 8b fixés sur cet anneau. Il s'ensuit que si l'on déplace diamétralement un des serre-flancs, par exemple en agissant à la main sur sa tige, l'autre serre-flanc subira un déplacement égal et opposé. On peut ainsi soit écarter l'un de l'autre des serre-flancs pour placer entre eux les pièces à assembler, soit les serrer contre ces pièces. Un moteur électrique à deux sens de marche peut être monté sur l'un des pignons 8 ou encore sur l'arbre a cardans 8a pour réaliser commodément le déplacement rapide des serre-flancs. Pour réaliser le serrage énergique final de ceux-ci sur les pièces à assembler, il est avantageux d'utiliser des vérins 8c montés sur l'anneau 1 et agissant en bout des tiges 4a, 5a des serre-flancs. Chacun de ces vérins est porté par une chape 8d pouvant pivoter autour d'un axe 8e de manière qu'en inclinant la chape comme représenté en traits mixtes en haut de la figure 2, on libère le passage du bout de la tige 4a, 5a quand on écarte les serre-flancs.

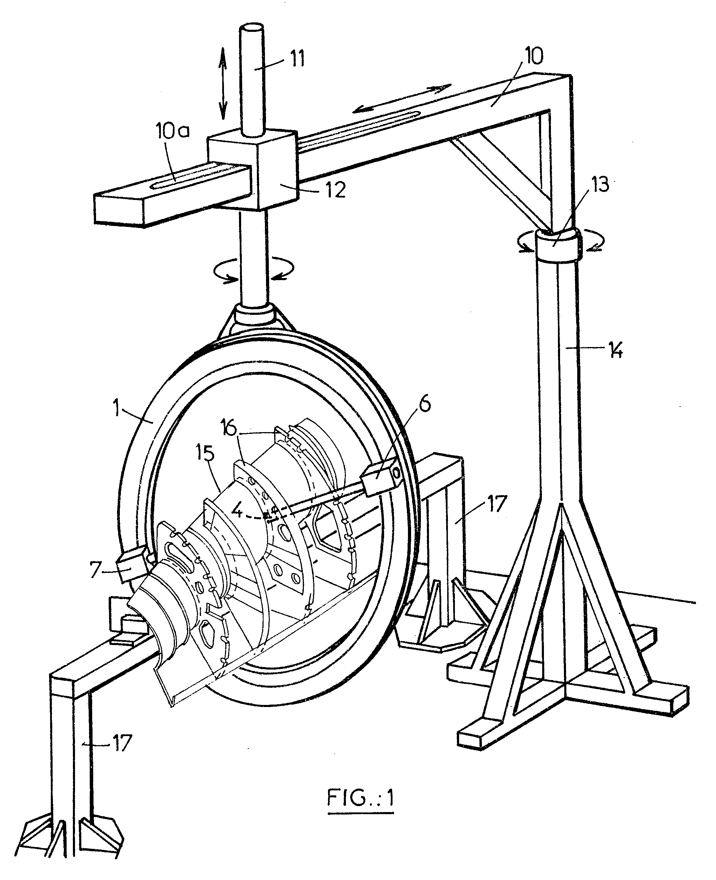

L'ensemble formé par les anneaux 1 et 2 avec les serre-flancs est suspendu à un support 10, représenté sur la figure 1 sous la forme d'une potence, par l'intermédiaire d'une barre verticale 11. Cette barre peut coulisser verticalement dans un dé 12 qui la porte et qui peut coulisser lui-même horizontalement dans le bras horizontal 10 de la potence, lequel est lui-même monté tournant en 13 dans le chevalet 14 Une fente 10a ménagée dans le bras horizontal de la potence permet le déplacement de la barre 11.

L'anneau 1 a un diamètre suffisant pour que l'on puisse placer et faire passer à son intérieur une structure de machine 15 sur laquelle on veut faire des assemblages. Dans l'exemple du dessin, la structure 15 représentée est une paroi de capotage de moteur d'avion sur laquelle on veut fixer, régulièrement espacés, des cadres d'entretoises 16. La structure étant fixe en position sur des supports 17, on comprend que les montages en translation et en rotation, qui ont été décrits pour supporter les anneaux 1 et 2, permettent de donner au plan vertical contenant ces anneaux des positions et orientations variées, en même temps que les anneaux peuvent être déplacés dans ledit plan. La libre rotation de l'anneau 1 dans l'anneau 2 permet aussi de régler dans ledit plan la position angulaire du diamètre occupé par les deux serre-flancs.

Il est donc possible de venir serrer entre les serre-flancs des parties différentes de la structure sans que l'on ait à déplacer celle-ci.

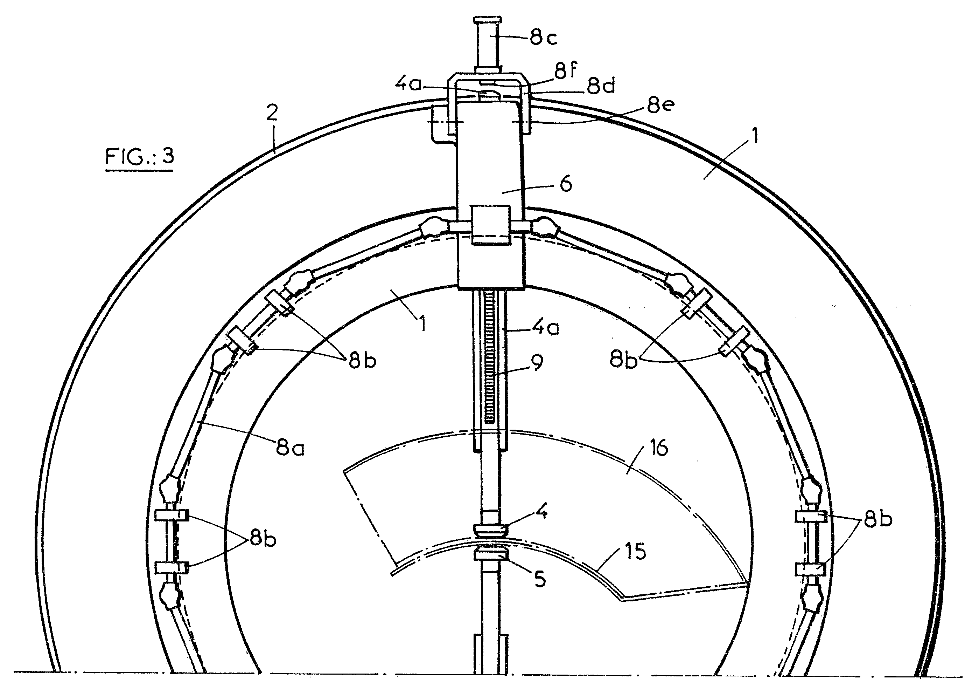

Pour assurer l'accostage au point A par exemple (figure 2), on écartera d'abord les serre-flancs soit en agissant à la main sur la tige de l'un deux, soit en mettant en marche le moteur électrique dont il a été question ci-dessus, puis on déplacera l'ensemble des anneaux 1 et 2 en saisissant la tige d'un serre-flanc, de manière à amener le centre commun des anneaux approximativement au point A, ensuite en faisant tourner l'anneau 1 dans l'anneau porteur 2 on orientera approximativement l'axe des tiges des serre flancs selon la normale à la surface en A en même temps qu'on rapprochera les serre-flancs de cette surface. On terminera alors le serrage des serre-flancs d'abord avec le moteur électrique, puis avec les verins 8c qui seront mis dans leur position active, dès que les tiges des serre-flancs auront dégagé le trajet de la tige des vérins dont on voit l'extrémité en 8f sur la figure 3. A l'aide de ces vérins qui seront avantageusement du type hydraulique, on peut faire en sorte que les serre-flancs exercent sur les surfaces à assembler une pression de serrage assez forte pour éviter tout glissement relatif de ces surfaces pendant l'opération d'assemblage.

Celle-ci peut être effectuée de diverses façons par exemple par rivetage ou par soudure. Pour la faciliter, les serre-flancs peuvent être munis, au milieu de leur face de pression, d'un trou 18 (figure 4) destiné au passage d'un rivet, d'une tête de soudure ou d'un autre outil ou moyen d'assemblage.

On doit remarquer que l'ensemble étant totalement équilibré, l'effort d'accostage sera uniquement une contrainte normale. En effet, si l'axe des serre-flancs n'est pas sur la normale des tôles à assembler, il s'introduit un couple de pivotement des anneaux qui corrige le défaut de perpendicularité.

Il va d'ailleurs de soi que le mode de réalisation décrit n'est pas le seul possible et que des modifications pourraient lui être apportées, notamment par substitution d'équivalents techniques, sans que l'on sorte du cadre de l'invention.

## Revendications

1. Dispositif pour l'accostage et le maintien sous contrainte de deux éléments de structure à assembler, comportant deux outils (4, 5) qui agissent en opposition pour serrer entre eux les surfaces à assembler, et qui sont portés par un anneau (1) lui-même porté par un support annulaire concentrique suspendu (2), dans lequel il peut tourner librement et qui peut être déplacé dans les trois directions de l'espace, caractérisé en ce que les outils (4, 5) sont des serre-flancs qui sont mobiles en translation le long d'un même diamètre de l'anneau (1).

2. Dispositif selon la revendication 1, caractérisé en ce que l'anneau (1) muni des serre-flancs (4, 5) a un diamètre suffisant pour qu'une structure de machine à laquelle on veut réunir d'autres éléments puisse être engagée dans cet anneau entre les serre-flancs.

3. Dispositif selon la revendication 1 ou 2, caractérisé en ce que le support annulaire (2) est porté par un axe vertical de suspension (11) qui est rotatif et déplaçable en translation, d'une part, selon sa propre direction et, d'autre part, perpendiculairement.

4. Dispositif selon l'une quelconque des revendications précédentes, caractérisé en ce que les serre-flancs (4, 5) sont conjugués de manière que le mouvement diamétral de l'un entraîne un mouvement diamétral égal, mais opposé, de l'autre.

5. Dispositif selon la revendication 4, caractérisé en ce que les serre-flancs sont portés par des tiges (4, 5a) disposées et guidées diamétralement et dont les déplacements sont conjugués par crémaillères et pignons (8, 9) avec renvoi de mouvement d'un pignon à l'autre.

6. Dispositif selon la revendication 5, caractérisé en ce que le renvoi de mouvement comporte un arbre à cardans (8a) qui est disposé dans des paliers (8b) sur l'anneau (1) qui porte les serre-flancs.

7. Dispositif selon l'une quelconque des revendications 4 à 6, caractérisé en ce qu'un moteur à deux sens de marche agit sur le renvoi de mouvement entre les serre-flancs pour assurer un déplacement rapide de ceux-ci.

8. Dispositif selon l'une des revendications précédentes, caractérisé en ce que des vérins (8c) sont associés aux guides (6, 7) des tiges des serre-flancs, de manière à pousser les tiges sous forte pression dans le dernier temps du serrage.

9. Dispositif selon la revendication 8, caractérisé en ce que les vérins (8c) agissent en bout des tiges (4a, 5a) des serre-flancs et sont escamotables pour libérer les tiges quand on veut écarter les serre-flancs.

10. Dispositif selon l'une des revendications précédentes, caractérisé en ce que les serre-flancs (4, 5) en forme de pied-de-biche ont une surface d'appui percée d'un trou central (18) pour le passage d'un outil ou moyen d'assemblage.

FIG.:1

FIG.:2

FIG.:4

FIG.:3

**Office européen des brevets**

**RAPPORT DE RECHERCHE EUROPEENNE**

Numero de la demande

EP 88 40 2528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | US-A-4 171 800 (SWEST) <br> * En entier * <br> --- | 1-4 | B 25 B 11/02 <br> B 25 B 5/00 <br> B 21 J 15/42 <br> B 23 K 37/04 |
| A | US-A-4 202 539 (AVCO) <br> * Figures; résumé * <br> --- | 1,2 | |
| A | DE-C- 402 653 (BAAKEN) <br> --- | 1 | |
| A | US-A-4 564 179 (HOLLINGSWORTH) <br> ----- | | |

**DOMAINES TECHNIQUES RECHERCHES (Int. Cl.4)**

B 25 B
B 21 J
B 23 K
B 25 H
B 23 Q

Le présent rapport a été établi pour toutes les revendications

| Lieu de la recherche | Date d'achèvement de la recherche | Examinateur |
|---|---|---|
| LA HAYE | 06-01-1989 | RIS M. |